# EUROPÄISCHE PATENTANMELDUNG

(11) **EP 1 840 683 A2**
(43) Veröffentlichungstag der Anmeldung: **03.10.2007**
(21) Anmeldenummer: 07105255.9
(22) Anmeldetag: 29.03.2007
(51) Int. Cl.: G05B 19/042

(54) **Kontrollvorrichtung**

(30) Priorität: 30.03.2006 CN 200610018711
(71) Anmelder: SIEMENS AKTIENGESELLSCHAFT, 80333 München (DE)
(72) Erfinder: Amrhein, Armin, 92245 Kümmersbruck (DE); Heel, Oliver, 67125 Schauernheim (DE); Runte, Markus, 91126 Schwabach (DE)

(57) **Zusammenfassung**

Kontrollvorrichtung zur Verwendung bei einer automatischen Kontrollvorrichtung und einer Bewegungskontrollvorrichtung, welche eine erste Prozessoreinheit sowie eine zweite Prozessoreinheit aufweist. Die erste Prozessoreinheit weist eine hauptsächliche Kontrollvorrichtung auf, welche für die hauptsächliche Kontrolle der Kontrollvorrichtung sowie für den Kommunikationsprozess der Kontrollvorrichtung verantwortlich ist. Die zweite Kontrollvorrichtung kann mehrere verschiedene I/O-Ports sowie elektrische Kreisläufe aufweisen, welche die Signale der vorstehend bezeichneten Ports verarbeiten. Die zweite Prozessoreinheit dient hauptsächlich der Kommunikation mit der zu kontrollierenden Vorrichtung. An der zweiten Prozessoreinheit ist außerdem der Anschluss mindestens einer Erweiterungsmodulkreisplatte möglich, durch welche die Kommunikation mit anderen verschiedenen zu kontrollierenden Vorrichtungen und/oder weiteren zu kontrollierenden Vorrichtungen durchgeführt wird.

## Beschreibung

### Technisches Gebiet

Die vorliegende Erfindung betrifft eine elektronische Kontrollvorrichtung. Genauer gesagt betrifft die vorliegende Erfindung eine Kontrollvorrichtung zur Verwendung im technischen Bereich der Automatisierung und der Maschinensteuerung.

### Stand der Technik

Jede automatisierte Maschine beziehungsweise numerisch gesteuerte Maschine verfügt über eine entsprechende Kontrollvorrichtung. Die Kontrollvorrichtung empfängt dabei die erforderlichen Kontrollbefehle sowie die Rückkoppelungsinformationen der zu kontrollierenden Vorrichtung zur Berechnung der entsprechenden Bewegungen beziehungsweise der Parameter für eine entsprechende Bearbeitung. Es erfolgt die Ausgabe entsprechender Befehle für die Bearbeitung beziehungsweise die Bewegung der zu kontrollierenden Vorrichtung. Die vorstehend bezeichneten, zu kontrollierenden Vorrichtungen werden in verschiedensten Anwendungsbereichen und an verschiedensten Einsatzorten zur Anwendung gebracht. Dementsprechend variieren auch die Eingabeenden und Ausgabeenden nach Art ihrer Ausgestaltung und nach ihrer Anzahl. Aus diesem Grund ist die Kontrollvorrichtung entsprechend dieser konkreten Bedingungen jeweils auszugestalten.

Für die Kontrollvorrichtung können speziell konzipierte, modularisierte Kontrollplatten verwendet werden. Es ist derzeit in dem betreffenden technischen Bereich außerdem üblich, dass die erforderlichen Kontrollfunktionen auf einer Kontrollplatte zusammengefasst werden. Entsprechend dem vorstehend bezeichneten Planungsentwurf weist die Kontrollvorrichtung ein Kontrollmodul auf, wobei das Kontrollmodul die verschiedenen Funktionen von Eingabe, Berechnung, Kommunikation, Überwachung sowie Ausgabe zusammenfasst. Bei dieser einheitlichen, modularisierten Konzeption kann eine Vereinfachung der Montage der gesamten Vorrichtung erreicht werden, was die Herstellungskosten der entsprechenden Vorrichtung absenkt.

Allerdings weist die vorstehend bezeichnete einheitliche, modularisierte Konzeption eine Mangelhaftigkeit dahingehend auf, dass sich ein solcher Planungsentwurf stets auf eine ganz bestimmte zu kontrollierende Vorrichtung bezieht und auf diese abgestimmt ist. Es ermangelt einem solchen Planungsentwurf an der universellen Verwendbarkeit für verschiedenste zu kontrollierende Vorrichtungen. Wenn es in der praktischen Anwendung zu größeren Abänderungen in Hinblick auf Anzahl oder Art der Ports der zu kontrollierenden Vorrichtungen kommt, so ist die Übereinstimmung der auf der Kontrollplatte vorgesehenen Anschlüsse nicht länger gewährleistet. Aus diesem Grund ist es dann nicht möglich, dass eine solche Kontrollplatte unmittelbar für die solchen Abänderungen unterzogene, zu kontrollierende Vorrichtungen verwendet werden kann. Es ist in einem solchen Fall vielmehr erforderlich, dass die Kontrollvorrichtung zunächst entsprechenden Modifikationen unterzogen wird. Eine solche Umgestaltung der Kontrollvorrichtung ist natürlich mit entsprechendem Zeitbedarf sowie mit Kosten verbunden.

Aus diesem Grund besteht die Aufgabe der vorliegenden Erfindung in der Bereitstellung einer Kontrollvorrichtung, welche auf zu kontrollierende Vorrichtungen mit Ports verschiedener Art und Anzahl abgestimmt ist.

Nach einer eingehenden Analyse des gegenwärtigen Standes der Technik in Hinblick auf die Kontrollmodule und den technologischen Arbeitsablauf haben die Antragsteller der vorliegenden Erfindung die Konzeption einer Doppelmodul-Kontrollvorrichtung vorgeschlagen. Hierbei werden zwei miteinander verbundene Module verwendet, um die entsprechenden Kontrollvorgänge durchführen zu können. Außerdem werden die hauptsächlichen Eingabe- und Ausgabefunktionen auf einem Modul der Kontrollvorrichtung zusammengefasst angeordnet.

Entsprechend einem Planungsentwurf erfolgt die Bereitstellung einer Kontrollvorrichtung zur Verwendung bei einer automatischen Kontrollvorrichtung und einer Bewegungskontrollvorrichtung, welche zumindest eine Eingangsleitung/Ausgangsleitung aufweist, dadurch gekennzeichnet, dass die vorstehend bezeichnete Vorrichtung außerdem aufweist:
Eine erste Prozessoreinheit, welche eine Kommunikationseinheit aufweist, wobei die vorstehend bezeichnete Kommunikationseinheit über einen Eingang , welcher der Aufnahme der Daten von dem Eingabeende dient, sowie über einen Ausgang, welcher dem Senden der Daten aus der Kontrollvorrichtung heraus dient, verfügt sowie über ein Computerelement verfügt, wobei das vorstehend bezeichnete Computerelement der Verarbeitung der Daten - einschließlich der Eingabedaten und Ausgabedaten des Eingabeendes - sowie der Verarbeitung der Anwenderbefehlsdaten und außerdem dem Transport der Ausgabedaten der automatischen Kontrolle an die vorstehend bezeichnete Kommunikationseinheit dient, sowie
Eine zweite Prozessoreinheit, welche mindestens ein Eingabeende/Ausgabeende (I/O) sowie ein elektrisches Stromkreisteil zur Verarbeitung der Signale der vorstehend bezeichneten Enden aufweist, welches mit der vorstehend bezeichneten ersten Prozessoreinheit verbunden ist und der Übertragung von Daten zwischen der angeschlossenen, zu kontrollierenden Vorrichtung und der vorstehend bezeichneten ersten Prozessoreinheit dient.

Bei einer Vorrichtung mit numerischer Kontrolle weist beispielsweise die erste Prozessoreinheit ein Kontrollteil auf, welches über eine Mikrokontrolleinheit mit CPU und/oder eine Bewegungskontrolleinheit verfügt.

Die Hardware der vorstehend bezeichneten zweiten Prozessoreinheit weist zumindest einen Port auf, welcher mit der vorstehend bezeichneten Kommunikationsleitung (beispielsweise SPI (Serial Peripheral Interface))verbunden ist. Außerdem übernimmt die Software der vorstehend bezeichneten zweiten Prozessoreinheit die Verwaltung der Daten, welche zwischen der vorstehend bezeichneten Kommunikationsleitung und der ersten Prozessoreinheit übertragen werden. Diese Daten beinhalten auch diejenigen Daten, welche innerhalb der zweiten Prozessoreinheit übertragen werden.

Die vorstehend bezeichneten Befehlsdaten des Anwenders repräsentieren die Daten, welche der Anwender für die zu kontrollierende Vorrichtung eingibt, beziehungsweise welche einer automatischen Steuerung oder Bewegungskontrolle unterliegen. Diese Daten können vorab in einer Speichervorrichtung der Kontrollvorrichtung gespeichert werden. Es ist auch möglich, dass diese Daten während des Betriebes der zu kontrollierenden Vorrichtung durch deren Eingabeende sowie weiterhin durch die vorstehend bezeichnete Kommunikationseinheit eingegeben werden.

Die vorstehend bezeichnete erste Prozessoreinheit und die vorstehend bezeichnete zweite Prozessoreinheit können auf einer ganzheitlich ausgeführten elektrischen Stromkreisplattenhalterung angeordnet werden. Allerdings kann die konstruktive Konzeption der zweiten Prozessoreinheit dafür sorgen, dass diese auf einfache Art und Weise von der elektrischen Stromkreisplattenhalterung entfernt werden kann. Es ist beispielsweise möglich, dass die zweite Prozessoreinheit durch eine Steckverbindung beziehungsweise eine Schraubverbindung mit der elektrischen Stromkreisplattenhalterung verbunden wird.

Es ist ebenfalls möglich, dass die zweite Prozessoreinheit mittels Steckverbindung, Schraubverbindung oder mittels irgendeiner anderen einem technischen Fachmann des betreffenden Gebietes vertraute Art und Weise unmittelbar an der ersten Prozessoreinheit befestigt wird.

Eine vorzugsweise praktische Ausführungsform der vorliegenden Erfindung sieht vor, dass die vorstehend bezeichnete erste Prozessoreinheit und die vorstehend bezeichnete zweite Prozessoreinheit jeweils auf einer elektrischen Stromkreisplatte angebracht werden. Durch Austausch derjenigen elektrischen Stromkreisplatte, auf welcher die zweite Prozessoreinheit vorgesehen ist, kann eine bessere Anpassung an verschiedene Arten von angeschlossenen, zu kontrollierenden Vorrichtungen vorgenommen werden.

Eine diesbezügliche konkrete Ausführungsform der vorliegenden Erfindung sieht vor, dass beispielsweise die zweite Prozessoreinheit am äußeren Rahmen der Kontrollvorrichtung eingesteckt und/oder angesteckt werden kann. Beziehungsweise ist es möglich, dass eine Befestigung an der vorstehend bezeichneten ersten Prozessoreinheit durchgeführt wird.

Entsprechend einer konkreten Ausführungsform handelt es sich bei der vorstehend bezeichneten Kommunikationsleitung um eine Kommunikationshauptleitung - beispielsweise um eine SPI-Leitung. Zwischen der vorstehend bezeichneten ersten Prozessoreinheit und der vorstehend bezeichneten zweiten Prozessoreinheit erfolgt mittels einer internen Kommunikationshauptleitung (beispielsweise SPI-Leitung) die Durchführung der Verbindung. Bei der vorstehend bezeichneten SPI-Leitung handelt es sich um eine mögliche Variante. Es kann sich auch um Leitungen RS232 oder RS485 usw. handeln.

Entsprechend einer weiteren konkreten Ausführungsform kann durch eine Erweiterung der Anzahl der Anschlüsse dafür gesorgt werden, dass die zweite Prozessoreinheit die Kommunikation mit Vorrichtungen anderer Art und/oder erhöhter Anzahl durchführen kann.

Es ist bei der Ausgestaltung auch möglich, für die erste Prozessoreinheit mehrere I/O-Ports vorzusehen. Beispielsweise handelt es sich um einige übliche I/O-Ports. Der entscheidende Punkt bei dem vorliegenden technischen Planungsentwurf besteht allerdings darin, dass zumindest ein großer Teil der flexibel anzubringenden I/O-Ports an der zweiten Prozessoreinheit angebracht wird.

Die vorstehend bezeichnete erste Prozessoreinheit kann außerdem mit einer Mensch/Maschine-Schnittfläche verbunden werden (beispielsweise einer handelsüblichen Überwachungsvorrichtung). Wenn die vorstehend bezeichnete erste Prozessoreinheit über grafische Bearbeitungsfunktionen verfügt, kann die vorstehend bezeichnete Überwachungsvorrichtung sogar nicht über grafische Bearbeitungsfunktionen verfügen. Es sind in diesem Falle lediglich grundlegende Darstellungsfunktionen für die Überwachungsvorrichtung erforderlich.

Erläuterung der Abbildungen
- Fig. 1: zeigt die Darstellung einer Prinzipübersicht der Kontrollvorrichtung.
- Fig. 2: zeigt die Darstellung der Dreiebenen-Stromkreisplatte der Kontrollvorrichtung.
- Fig. 3: zeigt die Darstellung der CPU-Hauptplatte der Kontrollvorrichtung.
- Fig. 4: zeigt die Darstellung einer I/O-Platte der Kontrollvorrichtung.
- Fig. 5: zeigt eine andere Darstellung einer I/O-Platte der Kontrollvorrichtung.
- Fig. 6: zeigt die Darstellung einer Erweiterungsplatte der Kontrollvorrichtung.

### Konkrete Ausführungsbeispiele

Entsprechend einem konkreten Planungsentwurf eines Ausführungsbeispiels des vorliegenden Gebrauchsmusters weist die erste Prozessoreinheit jeweils ein numerisches Ausführungskontrollteil und ein Mensch/Maschine-Schnittflächenbedienungsteil auf. Die zweite Prozessoreinheit weist ein I/O-Bedienteil auf. Hierbei wird die erste Prozessoreinheit dafür verwendet, die Kontrolle und Berechnung der Kommunikation mit der zu kontrollierenden Vorrichtung vorzunehmen, während die zweite Prozessoreinheit hauptsächlich dafür verwendet wird, die Kommunikation mit externen zu kontrollierenden Vorrichtungen durchzuführen.

Bei dem vorliegenden Gebrauchsmuster ist mit der so genannten "Bedienung" bei der Beschreibung der internen Abläufe der Kontrollvorrichtung die Übertragung von funktionsrelevanten Befehlsdaten der Kontrollvorrichtung gemeint.

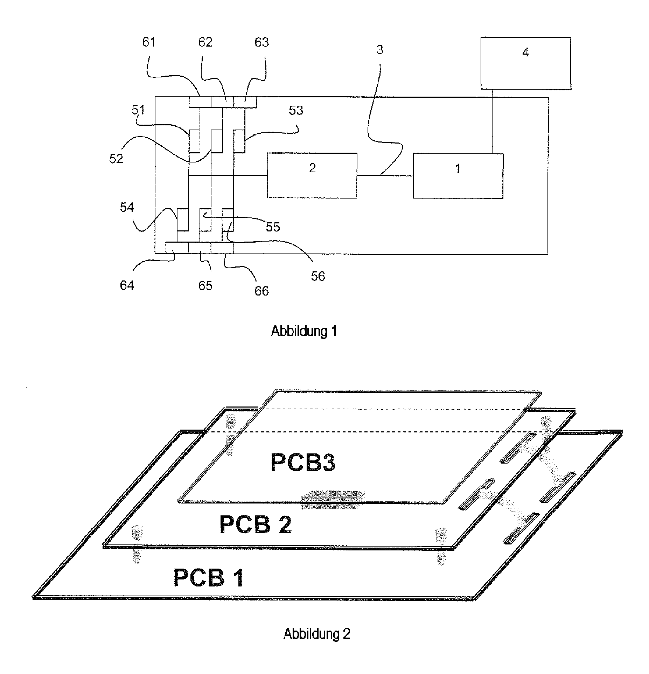

In der Fig. 1 erfolgt die Darstellung des Prinzips einer Kontrollvorrichtung entsprechend dem vorliegenden Gebrauchsmuster. In Fig. 1 bezeichnet 1 die erste Prozessoreinheit, 2 die zweite Prozessoreinheit, 3 die serielle Hauptverbindungsleitung zwischen erster Prozessoreinheit 1 und zweiter Prozessoreinheit 2, 4 eine Mensch/Maschine-Schnittstellenvorrichtung, 51 bis 56 jeweils den I/O-Anschlussstromkreis zur Verbindung mit vorstehend bezeichneter zweiter Prozessoreinheit 2, wobei die vorstehend bezeichneten I/O-Anschlussstromkreise jeweils wiederum durch Steckverbindung mit einem entsprechenden Anschluss der Kontrollvorrichtung 61 bis 66 verbunden sind.

Bei dem praktischen Ausführungsbeispiel des vorliegenden Gebrauchsmusters kommen eine erste Prozessoreinheit und eine zweite Prozessoreinheit zum Einsatz. Sämtliche Berechnungs-, Kontroll- und Kommunikationsaufgaben werden zunächst von diesen beiden Prozessoreinheiten bearbeitet.

Hierbei handelt es sich bei der ersten Prozessoreinheit um die hauptsächliche Prozessoreinheit. Deren CPU- ist eine Haupt-CPU mit relativ schneller Betriebsgeschwindigkeit. Diese nimmt die Funktion der Gesamtkontrolle wahr.

Eine Mensch/Maschine-Schnittstellenvorrichtung 4 (beispielsweise eine Überwachungsvorrichtung) kann mit der ersten Prozessoreinheit 1 verbunden werden, um die Überwachung der betreffenden Kontrollvorrichtung, des Zustandes der zu kontrollierenden Vorrichtung und/oder der Prozessinformationen vorzunehmen.

Die CPU der zweiten Prozessoreinheit (in der Abbildung nicht dargestellt) dient als eine Hilfs-CPU der Kontrollvorrichtung (beispielsweise Mikrokontrollvorrichtung mit CPU). Diese nimmt hauptsächlich die Aufgabe der Verbindung von externen zu kontrollierenden Vorrichtungen mit der ersten Prozessoreinheit wahr. Hier können relativ viele externe Kontrollvorrichtungen zusammengefasst werden. Entsprechend den Erfordernissen können USB-Kontrollvorrichtungen, D/A-Umschaltvorrichtungen, A/D-Umschaltvorrichtungen, verschiedene Arten von I/O-Ports, MMC-Karten (Multimediakarten)/SD-Karten (secure digital card)-Treibervorrichtungen usw. vorgesehen werden. Für diese I/O-Ports und D/A und A/D kann die zweite Prozessoreinheit unmittelbar mit den verschiedenen Eingabe- und Ausgabestromkreisen verbunden werden.

Wenn die I/O-Ports sowie D/A und A/D der zweiten Prozessoreinheit nicht ausreichend sind, können mehr als ein Erweiterungsmodul verwendet werden, um noch mehr zu kontrollierende Vorrichtungen aufzunehmen.

Eine Methode besteht beispielsweise darin, dass ein SPI-Parallelport PU2 der zweiten Prozessoreinheit mit verschiedenen D/A-Umschaltvorrichtungen und A/D-Umschaltvorrichtungen verbindet, um dann weiter mit dem I/O-Stromkreis der Kontrollvorrichtung verbunden zu werden. Eine andere Methode besteht darin, dass mit einem SPI-Parallelport die zweite Prozessoreinheit mit einer I/O-Kontrollvorrichtung verbunden wird, wobei die betreffende I/O-Kontrollvorrichtung wiederum mit mehren I/O-Ports verbunden wird.

Zwischen der ersten Prozessoreinheit und der zweiten Prozessoreinheit kann eine parallele Verbindung durchgeführt werden. Bei dieser Art der Verbindung besteht eine relativ hohe Geschwindigkeit des Datenaustausches der Kontrollvorrichtung.

Da jedoch normalerweise relativ viele parallele übermittelte Daten anfallen, besteht diesbezüglich eine gewisse Beschränkung bei integriert ausgeführten Vorrichtungen.

Aus diesem Grund erfolgt die Verbindung zwischen erster Prozessoreinheit und zweiter Prozessoreinheit vorzugsweise durch einen seriellen Port (beispielsweise SPI-Anschluss). Die möglichen Anschlussarten umfassen SSI, RS232, RS485 usw.

Bei den Figs. 2 bis 4 handelt es sich um die Darstellung einer erfindungsgemäßen Kontrollvorrichtung mit drei überlagerten elektrischen Stromkreisen. In Fig. 2 wird die konstruktive Konzeption mit Dreiebenen-Stromkreisplatten dargestellt.

Bei Fig. 2 handelt es sich um die Darstellung einer Erweiterungsmodulplatte PCB3. In der Mitte wird eine CPU-Platte PCB2 vorgesehen. Darunter wird eine I/O-Platte PCB1 vorgesehen. Oberhalb der drei elektrischen Stromkreisplatten (in der Abbildung nicht dargestellt) befindet sich die CAN-Hauptleitung. Zwischen den drei Platten befindet sich die Kommunikationsleitung, welche den Signaltransport zwischen den Platten gewährleistet.

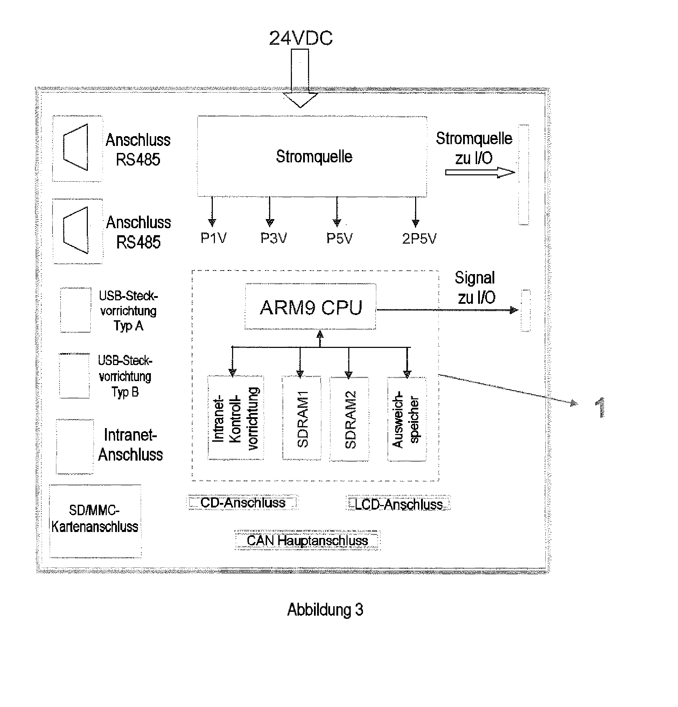

Bei Fig. 3 handelt es sich um die Darstellung einer beispielhaften CPU-Stromkreisplatte der ersten Prozessoreinheit einer Kontrollvorrichtung entsprechend dem vorliegenden Gebrauchsmuster. Die betreffende CPU-Stromkreisplatte befindet sich unterhalb der CAN-Hauptleitungserweiterungsplatte und ist hauptsächlich für die Arbeitsprozessverwaltung sowie für die Kommunikation mit der Hauptleitung verantwortlich. In Fig. 3 handelt es sich bei dem mittleren Teil um die erste Prozessoreinheit 1, welche eine ARM9 CPU sowie eine mit dieser CPU verbundene Intranet-Kontrollvorrichtung, zwei SDRAM (SDRAM1, SDRAM2) und einen Ausweichspeicher (FLASH) umfasst. Hierbei wird die Hauptplatte durch eine 24V-Gleichstromquelle 7 mit elektrischem Strom versorgt. Die vorstehend bezeichnete Gleichstromquelle 7 stellt nicht nur den elektrischen Strom für die Hauptplatte bereit, sondern versorgt auch durch die beiden in der Abbildung rechts an der Seite der CPU befindlichen Anschlüsse die unterhalb befindlichen I/O-Anschlussplatten mit elektrischem Strom. An der Unterseite der CPU in der Abbildung werden ein CD-Anschluss, ein LCD-Anschluss und ein CAN-Hauptleitungsverbinderanschluss vorgesehen. Die Kommunikation zwischen CPU-Platte und der oberhalb von dieser vorgesehenen CAN-Hauptleitungsplatte wird genau durch diesen vorstehend bezeichneten CAN-Hauptleitungsverbinderanschluss praktisch verwirklicht. An der linken Seite der CPU-Platte sind zwei RS485-Hauptleitungsanschlüsse, 2 USB-Ports (USB_A und USB_B), 1 Intranet-Anschluss und 1 SD/MMC-Anschluss vorgesehen.

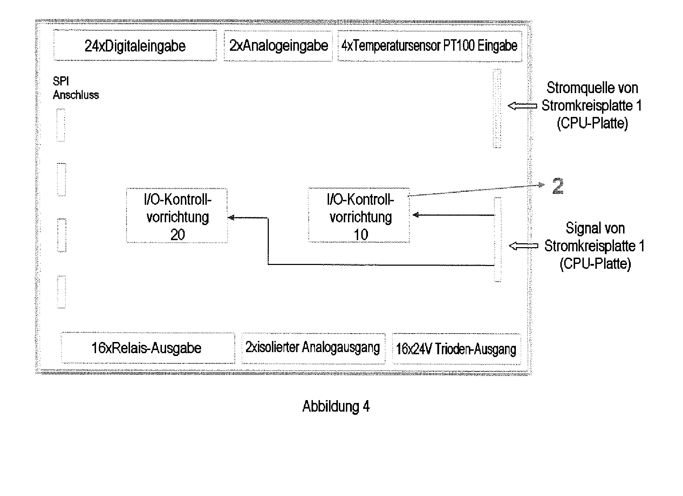

Bei Fig. 4 handelt es sich um die Darstellung der untersten I/O-Platte PCB2 der drei elektrischen Stromkreise der Kontrollvorrichtung gemäß Fig. 2. Wie in Fig. 4 dargestellt wird, befinden sich auf der betreffenden I/O-Platte 1 24-Digitaleingang, 2 Analogeingänge, 4 PT100-Eingänge zur Temperaturmessung, 16 Relaisausgänge, 2 isolierte Analogausgänge sowie 16 24V-Triodenausgänge. Die CPU-Hauptplatte PCB2 versorgt durch einen Port die betreffende I/O-Platte PCB3 mit elektrischem Strom. Außerdem erfolgt über einen anderen Port mit den zwei an PCB3 befindlichen I/O-Vorrichtungen - also I/O-Kontrollvorrichtung 10 und I/O-Vorrichtung 20 - die entsprechende Kommunikation. Weil eine Kontrollvorrichtung nicht über ausreichende Kapazitäten für derart zahlreiche Anschlüsse verfügt, werden hier zwei Kontrollvorrichtungen verwendet. Wenn es für den Anwender erforderlich ist, dass noch mehr verschiedenartige und größere Anzahlen von Ports vorgesehen werden, kann durch die SPI-Hauptleitung die Erweiterung von mehr I/O-Kontrollvorrichtungen durchgeführt werden, um diesen Anforderungen gerecht zu werden. Dies erfordert natürlich entsprechend der Kapazität und Geschwindigkeit der Hauptkontrollvorrichtung 1 die Anbringung von I/O-Vorrichtungen in geeigneter Anzahl. Außerdem werden an der I/O-Platte PCB3 in Fig. 4 zusätzlich 4 SPI-Anschlüsse vorgesehen, um die Erweiterung anderer Vorrichtungsteile mit SPI-Anschluss vorzunehmen - beispielsweise eine weitere I/O-Kontrollvorrichtung.

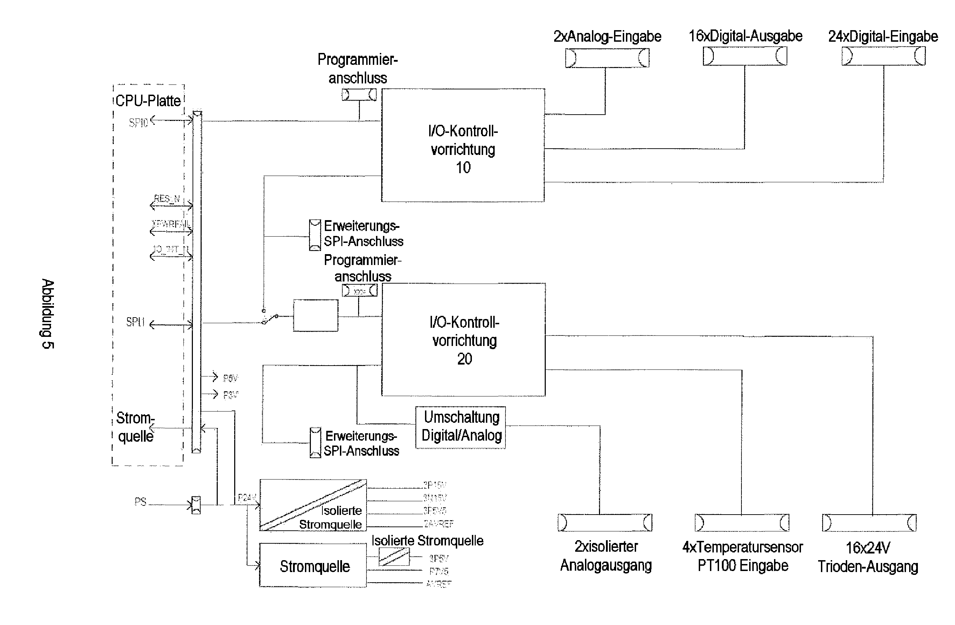

Bei Fig. 5 handelt es sich um die Darstellung einer I/O-Anschlussstromkreisplatte PCB2 (beispielsweise der in Fig. 4 dargestellten PCB2) eines konkreten Ausführungsbeispiels des erfindungsgemäßen Gebrauchsmusters. Hierbei handelt es sich um eine mögliche Ausgestaltungsform der Funktionen aus Fig. 4 auf dem elektrischen Stromkreis.

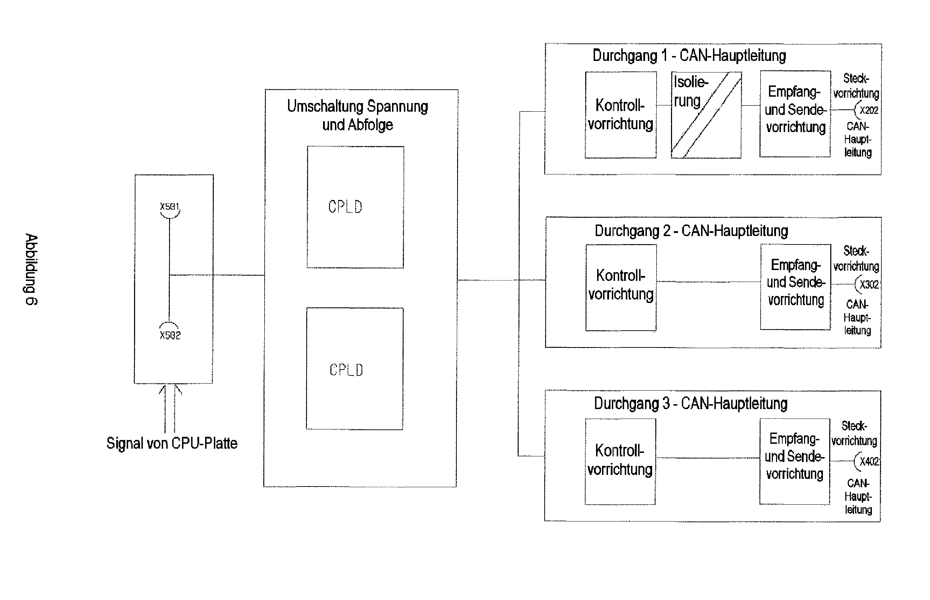

In Fig. 6 wird ein Beispiel eines obersten elektrischen Erweiterungsstromkreises PCB3 bei der Konstruktion aus Fig. 2 mit drei überlagerten elektrischen Stromkreisplatten dargestellt. In der Figur werden 3 CAN-Hauptleitungskontrollvorrichtungen sowie die drei erzeugten Hauptleitungskanäle dargestellt. Diese Erweiterungsplatte wird durch eine Adressdatenhauptleitung mit der elektrischen Stromkreisplatte PCB1 der hauptsächlichen Kontrollvorrichtung verbunden. Dies bedeutet mit anderen Worten, dass an PCB1 ein Parallelkommunikationsport freigelassen wird, um die Verbindungserweiterung mit anderen Funktionsmodulen durchzuführen. Es ist besonders darauf zu achten, dass ein Parallelport leicht zu stören ist. Bei Übertragung über lange Leitungen kann es zu einem Abfallen der Signalstärke führen, so dass es sich bei dem vorstehend bezeichneten Beispiel um eine konstruktive Konzeption für unmittelbare Steckverbindungen von Platte zu Platte handelt.

Bei der Verwendung der Kontrollvorrichtung entsprechend dem vorliegenden Gebrauchsmuster kann durch Austauschen der zweiten Prozessoreinheit auf einfache Art und Weise dafür gesorgt werden, dass neue Kontrollvorrichtungen an zu kontrollierende Vorrichtungen angepasst werden, welche in Hinblick auf Art und/oder Anzahl der Anschlüsse Abänderungen unterworfen sind. Die Kontrollvorrichtung gemäß dem vorliegenden Gebrauchsmuster ist für eine breite Anwendung für industrielle Anlagen mit Kontrolle geeignet. Beispielsweise kann der Einsatz bei kompletten automatisierten Industrieanlagen, bei Anlagen mit numerischer Steuerung usw. erfolgen.

## Patentansprüche

1. Kontrollvorrichtung zur Verwendung bei einer automatischen Kontrollvorrichtung und einer Bewegungskontrollvorrichtung, welche zumindest eine Eingangsleitung/Ausgangsleitung aufweist, **dadurch gekennzeichnet, dass** die vorstehend bezeichnete Vorrichtung außerdem aufweist:
Eine erste Prozessoreinheit (1), welche eine Kommunikationseinheit aufweist, wobei die vorstehend bezeichnete Kommunikationseinheit über einen Eingang , welcher der Aufnahme der Daten von dem Eingabeende dient, sowie über einen Ausgang, welcher dem Senden der Daten aus der Kontrollvorrichtung heraus dient, verfügt sowie außerdem über ein Computerelement verfügt, wobei das vorstehend bezeichnete Computerelement der Verarbeitung der Daten - einschließlich der Eingabedaten und Ausgabedaten des Eingabeendes - sowie der Verarbeitung der Anwenderbefehlsdaten und außerdem dem Transport der Ausgabedaten der automatischen Kontrolle an die vorstehend bezeichnete Kommunikationseinheit dient, sowie
Eine zweite Prozessoreinheit (2), welche mindestens ein Eingabeende/Ausgabeende sowie ein elektrisches Stromkreisteil zur Verarbeitung der Signale der vorstehend bezeichneten Enden aufweist, welches mit der vorstehend bezeichneten ersten Prozessoreinheit (1) verbunden ist und der Übertragung von Daten zwischen der angeschlossenen, zu kontrollierenden Vorrichtung und der vorstehend bezeichneten ersten Prozessoreinheit (1) dient.

2. Kontrollvorrichtung gemäß Patentanspruch 1, **dadurch gekennzeichnet, dass** an der vorstehend bezeichneten zweiten Prozessoreinheit (2) der Anschluss von mindestens einer Erweiterungsmodulkreisplatte erfolgt, durch welche die Kommunikation mit anderen verschiedenen zu kontrollierenden Vorrichtungen und/oder weiteren zu kontrollierenden Vorrichtungen durchgeführt wird.
